# EUROPEAN PATENT SPECIFICATION

(11) **EP 3 785 971 B1**
(45) Date of publication and mention of the grant of the patent: **26.04.2023**
(21) Application number: 19193535.2
(22) Date of filing: 26.08.2019
(51) Int. Cl.: B60K 35/00, B60K 37/06, H01H 19/00

(54) **A VEHICLE INPUT DEVICE WITH CUSTOM MADE APPEARANCE**
FAHRZEUGEINGABEVORRICHTUNG MIT KUNDENSPEZIFISCHEM ERSCHEINUNGSBILD
DISPOSITIF D'ENTRÉE DE VÉHICULE À ASPECT PERSONNALISÉ

(43) Date of publication of application: 03.03.2021
(73) Proprietor: Volvo Car Corporation, 40531 Göteborg (SE)
(72) Inventor: ERNSTSSON, Axel, SE-423 51 TORSLANDA (SE); GÖTHLIN, Jonas, SE-423 43 TORSLANDA (SE); BERGSTRÖM, Anders, SE-411 23 GÖTEBORG (SE)
(74) Representative: Kransell & Wennborg KB

(56) References cited:
- EP-A1- 1 994 539
- EP-B1- 1 994 539
- US-A1- 2006 219 156
- US-B2- 9 728 356

## Description

### TECHNICAL FIELD

The present disclosure generally relates to an input device adapted for controlling an electronic vehicle system.

### BACKGROUND

A typical control knob in a vehicle includes a housing which may be rotatable for providing a user selection, and/or adapted as a push-button. The control knobs in vehicles may for example provide user control of climate systems or infotainment systems in the vehicle.

The vehicle control knobs are often made from a plastic material with control knob function labels printed on the outer surface of the control knob or next to the control knob. The appearance of the vehicle control knobs is typically fixed and not easily custom-made in a scalable way, i.e. in many different variations, without excessive additional manufacturing costs.

However, custom-made interior design details are sometimes sought-after by the vehicle end-user, in particular for the high-end vehicle market.

Relevant prior art is shown in EP 1 994 539 A1, US9728356 B2 and US2006219156 A1.

### SUMMARY

The disclosed subject matter generally relates to an input device adapted for installation in a vehicle for providing control of an electronic vehicle system. The input device provides for using a visible decorative plate as a background surface of almost any material selected according to an end-user's demand.

Accordingly, the inventors realized an input device with improved ability for customizing the appearance of the input device in line with end-user's demand by allowing a transparent top cover to delimit an inner volume in which a custom-made decorative plate is used as a background for instructive symbols.

Since the decorative plate is arranged below the transparent top cover, the decorative plate is advantageously not reachable from outside the inner volume, although still visible through the top transparent cover. Thus, the decorative plate is well protected from direct touch and air degradation, which enables a wide range of decorative plate materials including materials that may be sensitive to touch and in some cases even air contact.

Accordingly, with the proposed input device, the decorative plate can be made in almost any material as long as it is possible to machine or in some way shape the material to the suitable shape to fit into the input device, thereby providing a wide range options for custom making the input device according to the end-user's demand.

The above advantages are obtained by the herein provided input device adapted for being installed in a vehicle for providing control of an electronic vehicle system. The input device comprising a transparent top cover arranged to seal an inner volume of the input device. Further, a decorative plate is arranged in the inner volume spaced apart from the transparent top cover, the decorative plate has an upper surface configured as a background for instructive symbols. The decorative plate and the instructive symbols are visible through the transparent top cover. With this configuration of the decorative plate may the material of the decorative plate be almost arbitrarily selected, subject to legislation and mechanical properties, whereby the material of the decorative plate is based on an end-user selection prior to assembly of the input device.

### BRIEF DESCRIPTION OF DRAWINGS

These and other aspects of the present invention will now be described in more detail, with reference to the appended drawings showing example embodiments of the invention, wherein:
FIG. 1 is a conceptual illustration of an input device according to embodiments of the present invention;
FIG. 2 is a conceptual cross-sectional side-view of an input device according to embodiments of the present invention;
FIG. 3 conceptually illustrates a customization process for an input device according to the present invention;
FIG. 4 is a flow-chart of method steps according to embodiments of the present invention;
FIG. 5 is a conceptual cross-sectional side-view of an input device according to embodiments of the present invention;
FIG. 6A conceptually illustrates a decorative plate and instructive symbols;
FIG. 6B conceptually illustrates a decorative plate and instructive symbols;
FIG. 7 is a conceptual cross-sectional side-view of an input device according to embodiments of the present invention;
FIG. 8 is a schematic side-view of an input device according to embodiments of the present invention;
Fig. 9A is an exploded view of a conceptually illustrated input device according to embodiments of the present invention;
Fig. 9B conceptually illustrates mounting a decorative plate in an input device according to embodiments of the present invention; and
FIG. 10 conceptually illustrates a vehicle interior including an input device according to embodiments of the present invention.

### DETAILED DESCRIPTION

In the present detailed description, various embodiments of an input device according to the present invention are described. However, the input device may be embodied in many different forms and should not be construed as limited to the embodiments set forth herein; rather, these embodiments are provided for thoroughness and completeness, and to fully convey the scope of the present invention to the skilled person. Like reference characters refer to like elements throughout.

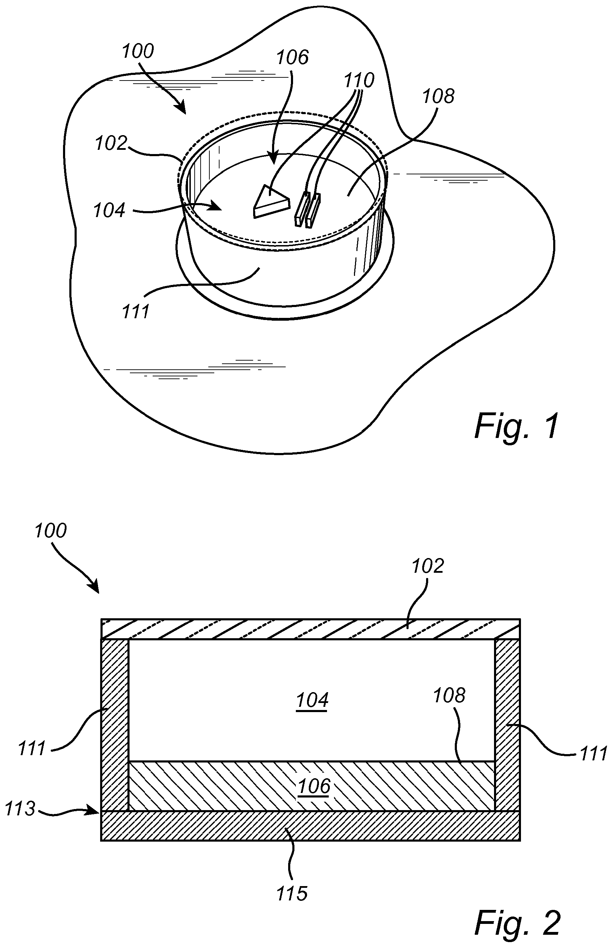

Fig. 1 illustrates an input device 100 adapted for being installed in a vehicle for providing control of an electronic vehicle system. The input device 100 comprises a transparent top cover 102 arranged to seal an inner volume 104 of the input device. Further, a decorative plate 106 is arranged in the inner volume 104 spaced apart from the transparent top cover 102. The decorative plate 106 has an upper surface 108 configured as a background for instructive symbols 110. The decorative plate 106 and the instructive symbols 110 are visible through the transparent top cover 102. The material of the decorative plate 106 is based on an end-user selection prior to assembly of the input device 100.

The inventors realized that there is a demand for customizing various details in vehicle interiors, in particular for creating a more luxurious feel for the end-user. With this insight the inventors developed the herein proposed input device which allows for nearly arbitrary decorative plates to be included. This is possible due to that the decorative plate is arranged in a sealed inner volume, protected from the outside environment. Further, the decorative plate is also protected from the transparent top cover by being spaced apart from it. Thus, the decorative plate is ensured not engage with other components unless necessary. For example, the upper surface of the decorative plate may not, at least in some possible implementations, be in contact with any secondary component, except for the material used for the graphics symbols, if formed on the upper surface of the decorative plate. Accordingly, the input device provides for nearly arbitrary materials of the decorative plate. Therefore, the material of the decorative plate is selected by the end user before the input device is assembled, and the configuration of the input device allows for a wide range of materials to choose from.

Instructive symbols are herein symbols that indicate to the end-user which functions that may be controlled using the input device.

A transparent top cover is made from an optically transparent material that allows for transmission of visible light through the material. The transparent top cover is preferably optically clear such that the upper surface of the decorative plate and the instructive symbols are distinctly visible. The transparent top cover may for example be made from glass or plastic materials.

As shown in the conceptual cross-section view of an input device 100 in fig. 2, the transparent top cover 102 may be attached to an outer structure 111 of the input device 100. Sealing of the inner volume may be made by e.g. gluing the transparent top cover 102 to the outer structure 111. The input device 100 is shown placed on a bottom support 115, which may be realized in various ways depending on specific implementations.

A non-exhaustive list of example materials of the decorative plate includes wood, asphalt, metal, metal alloys, graphite, charcoal, hematite, agate, marble, meteorite material, or any material that may be 3D-printed.

The material of the decorative plate may in some embodiments be made from an opaque material. Opaque materials are useful for hiding any components below the decorative plate, but also for creating a visually easily detectable decorative plate.

The inner volume 104 is a see-through volume which may include a gaseous medium, or vacuum, and which separates the decorative plate 106 from the transparent top cover 102. Accordingly, the medium in the inner volume 104 allows for the user to see the decorative plate 106 and the instructive symbols 110 through the transparent top cover 102 and the inner volume 104. Further, since the transparent top cover 102 seals the inner volume 104, the medium in the inner volume may be selected such that the decorative plate is best preserved. For example, the gaseous medium may be selected to be compatible with the selected material of the decorative plate, i.e. to preserve the material. In some embodiments may the inner volume 104 be vacuum. The gaseous medium may be air.

In some embodiments, the the decorative plate 106 is arranged at the bottom 113 of the inner volume 104, opposite the transparent top cover 102. This is not strictly necessary, but a farther distance from the transparent top cover 102 provides a larger volume and a possibility to fit thicker decorative plates 106. This advantageously opens for using materials that may be difficult to machine to thin samples.

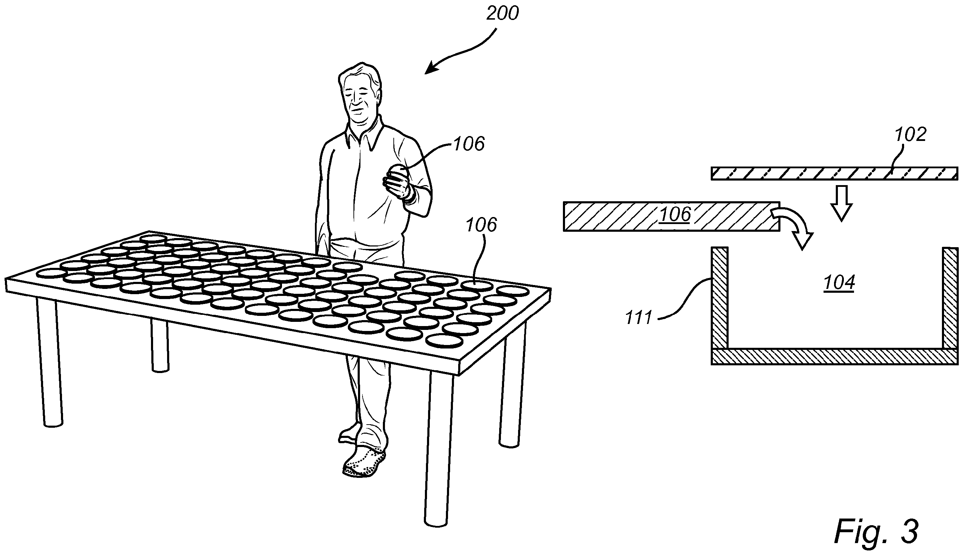

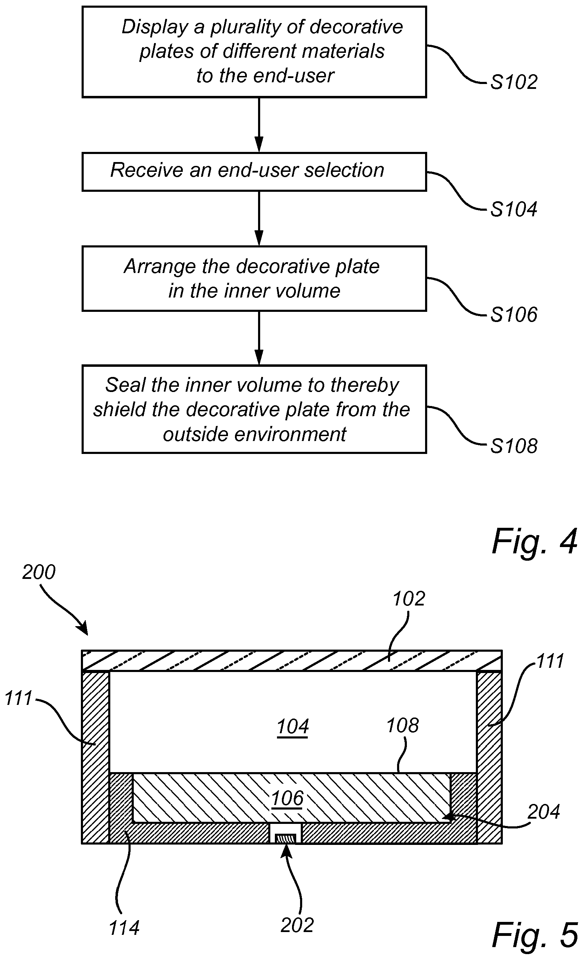

Fig. 3 conceptually illustrates a customization process for an input device according to the present disclosure. Fig. 3 will be described in conjunction with the flow-chart in fig. 4. In step S104, displaying a plurality of decorative plates 106 (only one is numbered) of different materials to the end-user 200. For example, the end-user 200 may be instructed to come to a viewing session in order to select the end-user's 200 preferred decorative plate. Once the end-user's selection is received in step S104, the selected decorative plate is arranged in the inner volume 104 such that the decorative plate 106 and the instructive symbols 110 are visible through the transparent top cover 102 in step S106. In step S108, sealing the inner volume 104 to thereby shield the decorative plate 106 from the outside environment. The size of the decorative plates 106 shown to the end user 200 in fig. 3 is exaggerated for clarity in the figure. Sealing the inner volume may be performed at least partly using the transparent top cover 102.

Another possibility for selection process is that a specific type of decorative plate is associated with the vehicle variant, edition, or sub-brand. In other words, the end-user selects the edition or variant or sub-brand of the vehicle which comes with a specific type of decorative plate. Nevertheless, the material of the decorative plate may be almost any material.

Fig. 5 conceptually illustrates an embodiment of the present disclosure. Here, a light source 202 is arranged to produce background illumination in the inner volume from below the decorative plate 106. Preferably, a light guide 114 is arranged around the circumference of the decorative plate 106 to guide light from the light source 202 to the inner volume such that light reaches the upper surface 108 of the decorative plate 106 from the sides. Using the light guide 114 allows for providing a more uniform distribution of the light into the inner volume 104. Further, using a light guide reduces the number of required light sources 202 for spreading the light uniformly in the inner volume 104. The light guide 114 is configured to receive light from the light source 202, here arranged below the decorative plate 106, and transport, e.g. by reflections, the light into the inner volume 104. The light may be diffusively spread, e.g. scattered into the inner volume 104 by the lightguide 114.

The decorative plate 106 may be shaped to fit in an opening 204 of the lightguide 114 which ensures a compact input device 200.

The light source 202 may in possible implementations be placed below the light guide 114. The light source 202 may for example include at least one light emitting diode.

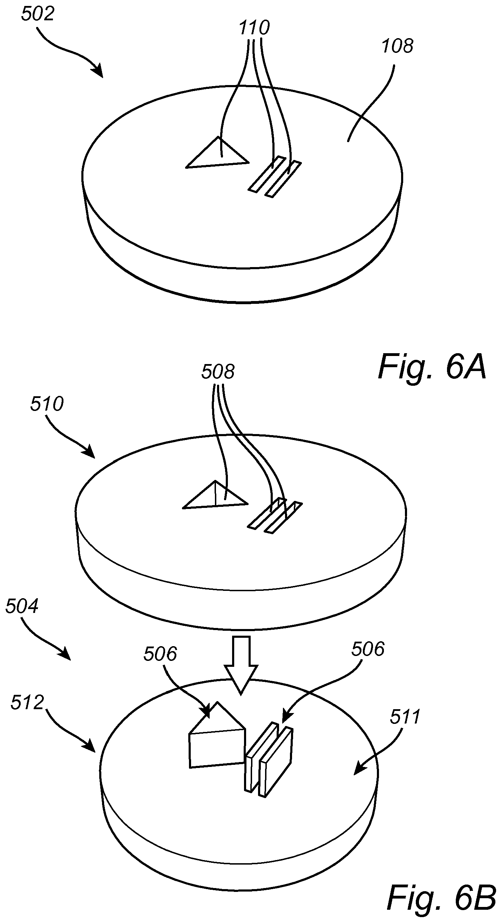

The instructive symbols may be formed in various ways. Turning to fig. 6A, in some embodiments, may the instructive symbols 110 be formed on the upper surface 108 of the decorative plate 502. For example, the instruction symbols 110 may be etched into the upper surface 108, or the instruction symbols 110 may be printed onto the upper surface 108, to mention some possibilities. The selected method for forming the instruction symbols 110 may depend on the choice of material of the decorative plate 502, and what technique is applicable for the selected material.

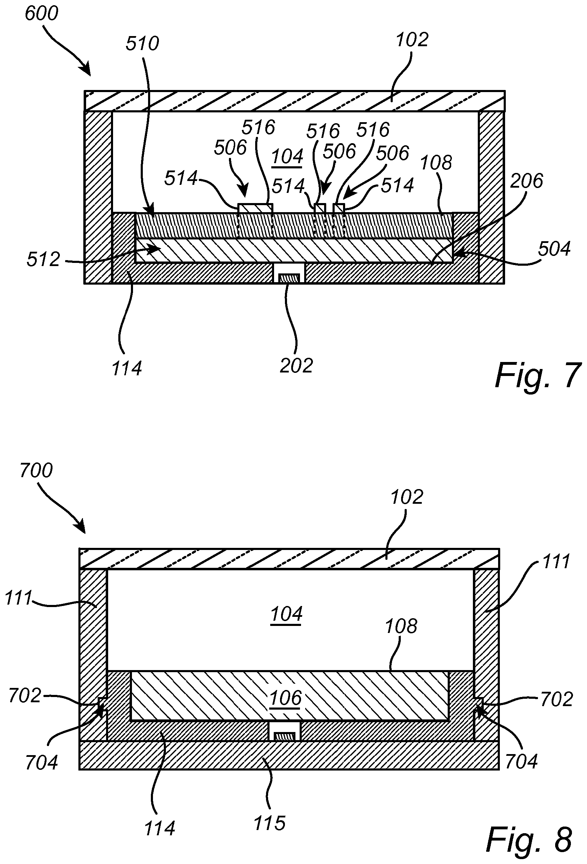

Fig. 6B conceptually illustrates another possible implementation for forming the instructive symbols. In fig. 6B, there is conceptually shown a graphics template 504 including protruding instructive symbols 506. The protruding instructive symbols 506 are arranged in through-holes 508 of the decorative plate 510 such that they reach into the inner volume 104 from below the decorative plate 510, see fig. 7. The instructive symbols 506 protrudes from the surface of a base 512 of the graphics template 504. The surface 511 faces the decorative plate 510 when assembled with the decorative plate 510. The graphics template 504, including the protruding instructive symbols 506 and the base 512 may be formed in one piece by e.g. molding, 3D-printing, etc.

Fig. 7 illustrates an input device 600 according to embodiments of the present invention. The input device 600 includes the graphics template 504 with the protruding instructive symbols 506, and the decorative plate 510 including through-holes 508. Thus, the protruding instructive symbols 506 are arranged in through-holes 508, see fig. 6, of the decorative plate 510 such that they reach through the decorative plate 510 and into the inner volume 104 from below the decorative plate 510.

This cooperative arrangement of the graphics template 504 and the decorative plate 510 advantageously enables for simple assembly by inserting the protruding instructive symbols 506 of the graphics template in the decorative plate through-holes 508. The protruding instructive symbols 506 provides for three-dimensional instructive symbols, i.e. an enhanced visual appearance.

Further, the graphics template 504 here in this embodiment includes a base 512 from which the instructive symbols 506 protrude, wherein the base is configured to rest on a surface 206 of the lightguide 114. The base 512 is interleaved between the decorative plate 510 and the lightguide 114. For example, the lightguide 14 may have a circular opening where the surface 206 defines the bottom of the opening, wherein the graphics template 504 and the decorative plate 510 are arranged in the circular opening, to thereby provide a compact input device with comfortable illumination of the decorative plate and instructive symbols.

In some embodiments, may side surfaces 514 (not all are numbered) of the protruding instructive symbols 506 facing in a direction parallel with the upper surface 108 of the decorative plate 510 include optically dispersive surfaces. This provides for less specular reflections from the sides of the protruding instructive symbols 506. One such optically dispersive surface may include matt chrome.

Further, in some embodiments, a top surface 516 of the instructive symbols facing the top transparent cover 102 includes an optically reflective surface. The optically reflective surface may provide for a shiny look and thereby clearly distinguishable instructive symbols and a luxurious impression. The optically reflective surface may be a chrome surface.

Preferably, the outline of the through-holes 508 in the main plane of the decorative plate 510 substantially matches the outline of the protruding instructive symbols 506. In this way is the area of the upper surface 108 of the decorative plate 510 still relatively large and the impression provided by the decorative plate is maintained. The main plane may be the plane of the upper surface 108.

The outer structure 111 may be clipped onto an inner structure for enclosing the inner volume. For example, as shown in fig. 8, the lightguide may include a protrusion 702, e.g. a circumferential protrusion that matches a trench, e.g. a circumferential trench 704 in the outer structure 111. Further, the input device may be a rotary control knob. For this, the outer structure 111 may be or include an outer rotary ring arranged around the circumference of the input device 700 for enabling a user-initiated input for controlling a setting of the electronic vehicle system by rotating the rotary ring 111. The outer rotary ring is adapted to be rotatable with respect to the decorative plate 106 and the instructive symbols.

The protrusion 702 and the trench 704 are here shown as an example, and there are other ways to attach the outer structure 111 to the inner structures of the input device, or the protrusion 702 and the trench 704 may be formed in other components than in the herein shown example.

When a light guide is included in the input device, the outer rotary ring may be arranged around an outer circumference of the lightguide.

In some embodiments, the input device is adapted to receive user input by a pressing downward force on the transparent top cover 102.

The decorative plate 106 in the herein described embodiments may be is removably attached or arranged in the inner volume. This may advantageously allow for the end-user to replace a present decorative plate with another decorative plate of his/her choice. Thus, the ability to customize the input device is further improved.

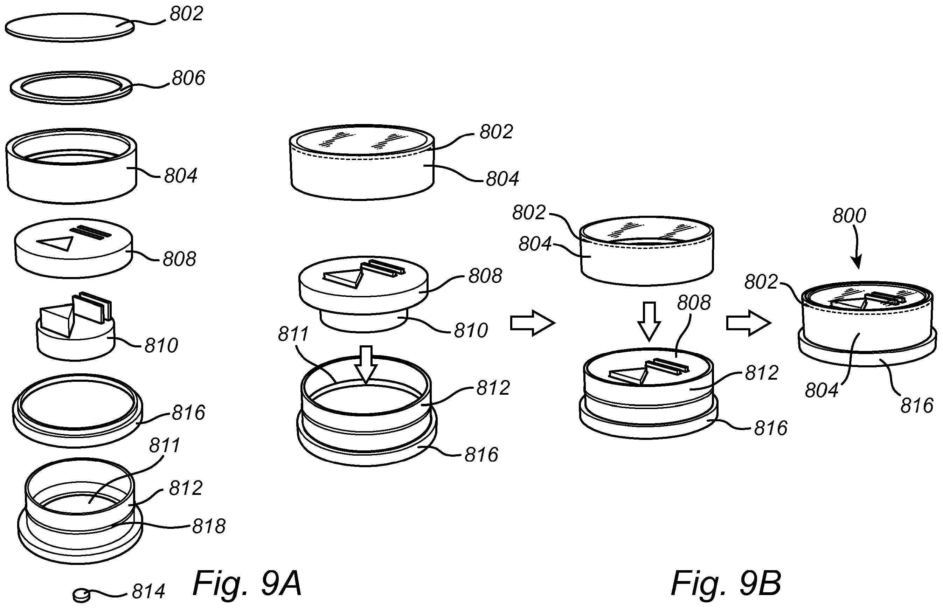

Fig. 9A illustrates an exploded view of an example input device 800 according to embodiments of the present invention. The input device 800 comprises a top transparent cover 802 attached to an outer structure in the form of a rotary ring 804 to seal an inner volume. Further, a cover ring 806 is arranged in the rotary ring 804 to cover the interface/s, between a decorative plate 808 and a light guide 812 and/or the rotary ring 804 depending on the specific implementations, and in some embodiments to hide the light guide 812. However, light may still be guided to the upper surface of the decorative plate 808 from below the cover ring 806. The decorative plate 808 and a graphics template 810 are arranged in the opening 811 of the light guide 812. A light source in the form of a light emitting diode 814 is arranged to transmit light which is guided by the light guide 812 to reach the decorative plate 808 from the side. A panel ring 816 is arranged around the outer circumference of the circular light guide 812.

Fig. 9B conceptually illustrates insertion of a decorative plate 808 including a graphics template 810. The graphics template 810 may be omitted if the instructive symbols are directly formed on the top surface of the decorative plate 808. The decorative plate 808 and the graphics template 810 are arranged in the opening 811 of the light guide 812. Once in place, the rotary ring 804 having the top transparent cover 802 attached thereon, and including the cover ring 806, is clipped onto the panel ring 816 or the lightguide. For example, the lightguide 812, or the panel ring 816 may include a circumferential protrusion 818 that matches a corresponding trench in the rotary ring 804. A similar structure may be included in the panel ring. For replacement of the decorative plate, the rotary ring 804 is declipped from the lightguide 812 and/or the panel ring 816, whereby the decorative plate 808 may be replaced by another decorative plate.

The specific mechanism for attaching the rotary ring 804 to the other parts the input device, e.g. the light guide and/or the panel ring, may vary depending on specific implementations, and the ones described herein serve merely as examples. For example, additional components may even be used for attaching the rotary ring in specific implementations.

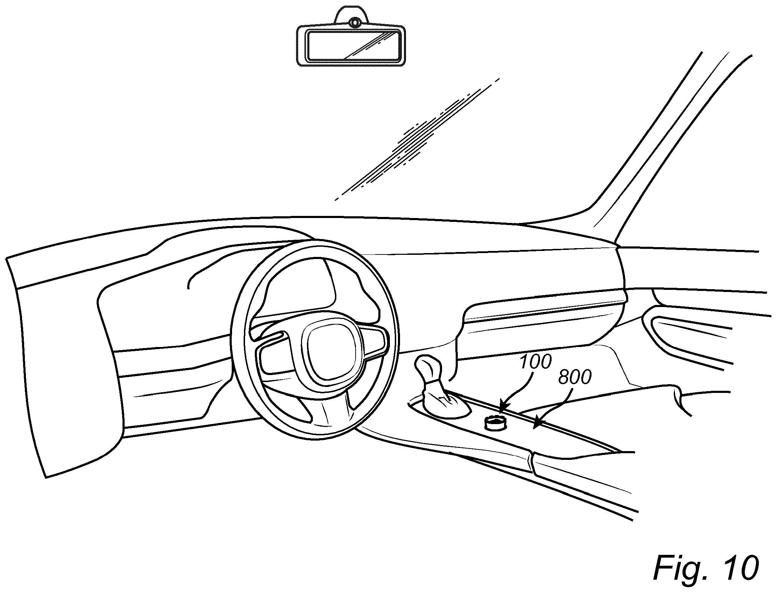

Fig. 10 conceptually illustrates a vehicle interior in which an input device 100 according to the present invention is arranged. The input device 100 is arranged in a centre module 800 of the vehicle interior. The electronic system that is controllable by user input via the input device 100 may be an entertainment system of the vehicle. For example, the input device may be configured to receive user input for controlling the audio volume of an entertainment system in the vehicle and a play and pause function of the entertainment system.

There is further provided a vehicle comprising any one of the herein disclosed input devices.

The person skilled in the art realizes that the present invention by no means is limited to the preferred embodiments described above. On the contrary, many modifications and variations are possible within the scope of the appended claims.

Various examples have been described. These and other examples are within the scope of the following claims.

## Claims

1. An input device (100) adapted for being installed in a vehicle for providing control of an electronic vehicle system, the input device comprising:
a transparent top cover (102) arranged to seal an inner volume (104) of the input device;
a decorative plate (106) arranged in the inner volume spaced apart from the transparent top cover, the decorative plate has an upper surface (108) configured as a background for instructive symbols, wherein the decorative plate and the instructive symbols are visible through the transparent top cover, and wherein a material of the decorative plate is selectable based on an end-user selection prior to assembly of the input device,
wherein the inner volume is a see-though volume including a gaseous medium, or being vacuum, and which separates the decorative plate from the transparent top cover, and
**characterized in that**
the decorative plate is arranged at the bottom of the inner volume, opposite the transparent top cover.

2. The input device according to claim 1, wherein the decorative plate includes an opaque material.

3. The input device according to any one of the preceding claims, wherein a light source (202) is arranged to produce background illumination in the inner volume from below the decorative plate.

4. The input device according to claim 3, wherein a light guide (114) is arranged around the circumference of the decorative plate to guide light from the light source to the inner volume and from the side onto the decorative plate.

5. The input device according to anyone of the preceding claims, wherein the instructive symbols are formed on the upper surface of the decorative plate.

6. The input device according to anyone of claims 1 to 4, comprising a graphics template (504) including protruding instructive symbols (506).

7. The input device according to claim 6, wherein the protruding instructive symbols are arranged in through-holes (508) of the decorative plate and reaching into the inner volume from below the decorative plate.

8. The input device according to anyone of claims 6 and 7, wherein the graphics template includes a base (512) from which the instructive symbols protrude, wherein the base is configured to rest on a surface of the lightguide.

9. The input device according to anyone one claims 6 to 8, wherein the outline of the through-holes in the main plane of the decorative plate substantially matches the outline of the protruding instructive symbols.

10. The input device according to anyone of the preceding claims, wherein the input device comprises an outer rotary ring (111) arranged around the circumference of the input device for enabling a user-initiated input for controlling a setting of the electronic vehicle system by rotating the rotary ring.

11. The input device according to anyone of the preceding claims, wherein the input device is adapted to receive user input by a pressing downward force on the transparent cover.

12. The input device according to anyone of the preceding claims, wherein the decorative plate is removably arranged in the inner volume.

13. A method for customizing an input device comprising:
a transparent top cover arranged to seal an inner volume of the input device;
a decorative plate including an upper surface configured as a background for instructive symbols, the method including:
displaying a plurality of decorative plates of different materials to the end-user;
receiving an end-user selection, and
arranging the selected decorative plate at the bottom of the inner volume, opposite the transparent top cover such that the decorative plate and the instructive symbols are visible through the transparent top cover and through the inner volume being a see-though volume including a gaseous medium, or being vacuum, and which separates the decorative plate from the transparent top cover,
sealing the inner volume to thereby shield the decorative plate from the outside environment.

## Patentansprüche

1. Eingabevorrichtung (100), die dafür eingerichtet ist, in einem Fahrzeug installiert zu sein, um eine Steuerung eines elektronischen Fahrzeugsystems bereitzustellen, wobei die Eingabevorrichtung Folgendes umfasst:
eine transparente obere Abdeckung (102), die dafür angeordnet ist, einen Innenraum (104) der Eingabevorrichtung abzudichten,
eine dekorative Platte (106), die in dem Innenraum beabstandet von der transparenten oberen Abdeckung angeordnet ist, wobei die dekorative Platte eine Oberseite (108) aufweist, die als ein Hintergrund für Anweisungssymbole gestaltet ist, wobei die dekorative Platte und die Anweisungssymbole durch die transparente obere Abdeckung sichtbar sind und wobei ein Material der dekorativen Platte basierend auf einer Endbenutzerauswahl vor dem Einbau der Eingabevorrichtung wählbar ist,
wobei der Innenraum ein durchsichtiger Raum ist, der ein gasförmiges Medium enthält oder ein Vakuum ist und der die dekorative Platte von der transparenten oberen Abdeckung trennt, und
**dadurch gekennzeichnet, dass**
die dekorative Platte an der Unterseite des Innenraums, gegenüber der transparenten oberen Abdeckung angeordnet ist.

2. Eingabevorrichtung nach Anspruch 1, wobei die dekorative Platte ein undurchsichtiges Material enthält.

3. Eingabevorrichtung nach einem der vorhergehenden Ansprüche, wobei eine Lichtquelle (202) angeordnet ist, um in dem Innenraum von unterhalb der dekorativen Platte eine Hintergrundbeleuchtung bereitzustellen.

4. Eingabevorrichtung nach Anspruch 3, wobei um den Umfang der dekorativen Platte ein Lichtleiter (114) angeordnet ist, um Licht von der Lichtquelle in den Innenraum und von der Seite auf die dekorative Platte zu leiten.

5. Eingabevorrichtung nach einem der vorhergehenden Ansprüche, wobei die Anweisungssymbole auf der Oberseite der dekorativen Platte gebildet sind.

6. Eingabevorrichtung nach einem der Ansprüche 1 bis 4, eine Grafikschablone (504) umfassend, die hervorstehende Anweisungssymbole (506) enthält.

7. Eingabevorrichtung nach Anspruch 6, wobei die hervorstehenden Anweisungssymbole in Durchgangsöffnungen (508) der dekorativen Platte angeordnet sind und von unterhalb der dekorativen Platte in den Innenraum reichen.

8. Eingabevorrichtung nach einem der Ansprüche 6 und 7, wobei die Grafikschablone eine Basis (512) enthält, von der die Anweisungssymbole hervorstehen, wobei die Basis dafür gestaltet ist, auf einer Oberfläche des Lichtleiters aufzuliegen.

9. Eingabevorrichtung nach einem der Ansprüche 6 bis 8, wobei der Umriss der Durchgangsöffnungen in der Hauptebene der dekorativen Platte im Wesentlichen mit dem Umriss der hervorstehenden Anweisungssymbole übereinstimmt.

10. Eingabevorrichtung nach einem der vorhergehenden Ansprüche, wobei die Eingabevorrichtung einen äußeren Drehring (111) umfasst, der rings um den Umfang der Eingabevorrichtung angeordnet ist, um eine benutzererinitiierte Eingabe zum Steuern einer Einstellung des elektronischen Fahrzeugsystems durch Drehen des Drehrings zu ermöglichen.

11. Eingabevorrichtung nach einem der vorhergehenden Ansprüche, wobei die Eingabevorrichtung dafür eingerichtet ist, eine Benuterereingabe durch eine Herabdrückkraft auf die transparente Abdeckung zu empfangen.

12. Eingabevorrichtung nach einem der vorhergehenden Ansprüche, wobei die dekorative Platte abnehmbar in dem Innenraum angeordnet ist.

13. Verfahren zum kundenspezifischen Anpassen einer Eingabevorrichtung, Folgendes umfassend:
eine transparente obere Abdeckung, die dafür angeordnet ist, einen Innenraum der Eingabevorrichtung abzudichten,
eine dekorative Platte, die eine Oberseite aufweist, die als ein Hintergrund für Anweisungssymbole gestaltet ist, wobei das Verfahren Folgendes enthält:
Anzeigen mehrerer dekorativer Platten aus unterschiedlichen Materialien für den Endbenutzer,
Empfangen einer Auswahl des Endbenutzers und
Anordnen der ausgewählten dekorativen Platte an der Unterseite des Innenraums gegenüber der transparenten oberen Abdeckung derart, dass die dekorative Platte und die Anweisungssymbole durch die transparente obere Abdeckung und durch den Innenraum sichtbar sind, der ein durchsichtiger Raum ist, welcher ein gasförmiges Medium enthält, oder ein Vakuum ist und der die dekorative Platte von der transparenten oberen Abdeckung trennt,
Abdichten des Innenraums, um dadurch die dekorative Platte von der Außenumgebung abzuschirmen.

## Revendications

1. Dispositif d'entrée (100) adapté à être installé dans un véhicule pour assurer la commande d'un système électronique du véhicule, le dispositif d'entrée comprenant :
un couvercle de dessus transparent (102) agencé pour obturer hermétiquement un volume intérieur (104) du dispositif d'entrée ;
une plaque décorative (106) agencée dans le volume intérieur en étant espacée du couvercle de dessus transparent, la plaque décorative étant pourvue d'une surface supérieure (108) configurée comme un arrière-plan pour des symboles d'instruction, la plaque décorative et les symboles d'instruction étant visibles à travers le couvercle de dessus transparent, et un matériau de la plaque décorative étant sélectionnable sur la base d'une sélection par un utilisateur final préalablement à l'assemblage du dispositif d'entrée,
le volume intérieur étant un volume laissant passer le regard comportant un milieu gazeux, ou dans lequel on a fait le vide, et séparant la plaque décorative du couvercle de dessus transparent, et
**caractérisé en ce que**
la plaque décorative est agencée au fond du volume intérieur, en regard du couvercle de dessus transparent.

2. Dispositif d'entrée selon la revendication 1, dans lequel la plaque décorative comporte un matériau opaque.

3. Dispositif d'entrée selon l'une quelconque des revendications précédentes, dans lequel une source de lumière (202) est agencée pour produire un rétroéclairage dans le volume intérieur par le dessous de la plaque décorative.

4. Dispositif d'entrée selon la revendication 3, dans lequel un guide de lumière (114) est agencé autour de la circonférence de la plaque décorative pour guider la lumière depuis la source de lumière jusqu'au volume intérieur et depuis le côté jusque sur la plaque décorative.

5. Dispositif d'entrée selon l'une quelconque des revendications précédentes, dans lequel les symboles d'instruction sont formés sur la surface supérieure de la plaque décorative.

6. Dispositif d'entrée selon l'une quelconque des revendications 1 à 4, comprenant un gabarit graphique (504) comportant des symboles d'instruction protubérants (506) .

7. Dispositif d'entrée selon la revendication 6, dans lequel les symboles d'instruction protubérants sont agencés dans des trous traversants (508) de la plaque décorative et s'étendent jusque dans le volume intérieur par le dessous de la plaque décorative.

8. Dispositif d'entrée selon l'une quelconque des revendications 6 et 7, dans lequel le gabarit graphique comporte un socle (512) duquel les symboles d'instruction protubèrent, le socle étant configuré pour reposer sur une surface du guide de lumière.

9. Dispositif d'entrée selon l'une quelconque des revendications 6 à 8, dans lequel le contour des trous traversants dans le plan principal de la plaque décorative épouse sensiblement le contour des symboles d'instruction protubérants.

10. Dispositif d'entrée selon l'une quelconque des revendications précédentes, le dispositif d'entrée comprenant une bague extérieure rotative (111) agencée autour de la circonférence du dispositif d'entrée pour permettre une entrée émanant de l'utilisateur visant à commander un réglage du système électronique du véhicule par rotation de la bague rotative.

11. Dispositif d'entrée selon l'une quelconque des revendications précédentes, le dispositif d'entrée étant adapté à recevoir une entrée de l'utilisateur par une force de pression vers le bas sur le couvercle transparent.

12. Dispositif d'entrée selon l'une quelconque des revendications précédentes, dans lequel la plaque décorative est agencée amovible dans le volume intérieur.

13. Procédé de personnalisation d'un dispositif d'entrée comprenant :
un couvercle de dessus transparent agencé pour obturer hermétiquement un volume intérieur du dispositif d'entrée ;
une plaque décorative comportant une surface supérieure configurée comme un arrière-plan pour des symboles d'instruction, le procédé comportant :
la présentation à l'utilisateur final d'une pluralité de plaques décoratives de matériaux différents ;
la réception d'une sélection par l'utilisateur final, et
l'agencement de la plaque décorative sélectionnée au fond du volume intérieur en regard du couvercle de dessus transparent de telle sorte que la plaque décorative et les symboles d'instruction soient visibles à travers le couvercle de dessus transparent et à travers le volume intérieur, lequel est un volume laissant passer le regard comportant un milieu gazeux, ou dans lequel on a fait le vide, et séparant la plaque décorative du couvercle de dessus transparent,
l'obturation hermétique du volume intérieur pour ainsi protéger la plaque décorative du milieu extérieur.
